# EUROPEAN PATENT APPLICATION

(11) **EP 2 881 816 A2**
(43) Date of publication of application: **10.06.2015**
(21) Application number: 14195907.2
(22) Date of filing: 02.12.2014
(51) Int. Cl.: G05B 19/401

(54) **Repair method, system for automatic locating and clearing and tool for automated locating and modifying**

(30) Priority: 05.12.2013 US 201314097902
(71) Applicant: General Electric Company, Schenectady, New York 12345 (US)
(72) Inventor: Reid, Thomas Robert, Greenville, SC South Carolina 29615 (US); Yuvalaklioglu, Mustafa, 41470 TR Kocaeli (TR); Fulton, Blake Allen, Greenville, SC South Carolina 29615 (US); Lanza, Julio Eduardo, Greenville, SC South Carolina 29615 (US); Lewis, Gareth William David, Greenville, SC South Carolina 29615 (US); Lomas, Jonathan Matthew, Greenville, SC South Carolina 29615 (US); Reed, Francis Alexander, Schenectady, NY New York 12345 (US)
(74) Representative: Cleary, Fidelma

(57) **Abstract**

A repair method is provided and includes deriving (40), from a model of a component, drilling vectors (311) respectively associated with fluid flow passages of the component, obtaining (42) location data (320) of each of the fluid flow passages at least partially from a source other than the model and relying (43) upon the derived drilling vectors (311) and the obtained location data (320) of each of the fluid flow passages to position a tool (30) configured to modify each of the fluid flow passages.

## Description

### BACKGROUND OF THE INVENTION

The subject matter disclosed herein relates to systems and methods for turbine repair and, more particularly, to systems and methods for turbine repair by automated location and clearing of turbine passages or automated location and modification.

Gas turbine engines include several components that are repeatedly exposed to high temperature and high pressure fluids. These components include, for example, the nozzles of a turbine stage, which are disposed in the turbine stage to direct flows of the fluids toward bucket stages. Each nozzle may include an inboard platform section, an endwall section and an airfoil section interposed between the inboard platform section and the endwall section. The airfoil section has a leading edge and a trailing edge defined with respect to the predominant direction of flow through the turbine stage and opposite pressure and suction sides extending between the leading and trailing edges.

Each of the nozzles may be formed of a metallic substrate material that is coated with a thermal or environmental barrier coating (TBC or EBC). The coating is provided to protect the underlying metallic substrate material from damages associated with exposure of the metallic substrate material to the high temperature and high pressure fluids. Each nozzle is further formed to define fluid flow passages, such as film fluid flow passages or diffusion holes, at one or both of the pressure and suction sides. These fluid flow passages allow for coolant to be directed toward various areas of the nozzles to decrease the risk of damage due to exposure to the fluids.

During original part manufacture, the fluid flow passages of the nozzles are normally formed after the coating is applied. However, during repair processes, the coating may be stripped with the metallic substrate material subsequently re-coated. In these cases, cleaning and restoration of the fluid flow passages after the coating is stripped and the metallic substrate material is re-coated present significant challenges. Such challenges arise from the fact that restoration of the fluid flow passages to their original geometry and removing all coating debris from their corresponding passages is important to the quality of the repair. In addition, the number of the fluid flow passages may be substantial (i.e., there may be hundreds of fluid flow passages).

### BRIEF DESCRIPTION OF THE INVENTION

According to one aspect of the invention, a repair method is provided and includes deriving, from a model of a component, drilling vectors respectively associated with fluid flow passages of the component, obtaining location data of each of the fluid flow passages at least partially from a source other than the model and relying upon the derived drilling vectors and the obtained location data of each of the fluid flow passages to position a tool configured to modify each of the fluid flow passages.

According to another aspect of the invention, a repair method for use with a component including fluid flow passages is provided. The method includes deriving, from a model of the component, drilling vectors respectively associated with the fluid flow passages, assuming that the derived drilling vectors are accurate, obtaining location data for the fluid flow passages at least partially from a source other than the model and positioning a tool configured to modify each of the fluid flow passages in accordance with the derived drilling vectors and the obtained location data.

According to another aspect of the invention, a system for automatically locating and clearing fluid flow passages of a component is provided. The tool includes a memory unit in which a model of the component is stored, the model comprising drilling vectors respectively associated with each of the fluid flow passages, a scanning unit disposed to generate location data of each of the fluid flow passages from a scan of the component, a repairing unit configured to automatically clear and reestablish each of the fluid flow passages and a processing unit disposed to access the memory unit and the scanning unit and to position the repairing unit in accordance with the drilling vectors and the location data.

According to yet another aspect of the invention, an automated passage location and modifying tool is provided and includes an automated manipulator, first and second heads, which are respectively configured to be coupled to the automated manipulator, the first head being configured to scan at least a portion of a component and the second head being configured to dispense material with respect to the component, and a controller configured to position the first and second heads relative to the component. The positioning of at least the second head is in accordance with drilling vectors of fluid flow passages derived from a model of the component and a result of the scan of the component by the first head.

These and other advantages and features will become more apparent from the following description taken in conjunction with the drawings.

### BRIEF DESCRIPTION OF THE DRAWINGS

The subject matter, which is regarded as the invention, is particularly pointed out and distinctly claimed in the claims at the conclusion of the specification. The foregoing and other features, and advantages of the invention are apparent from the following detailed description taken in conjunction with the accompanying drawings in which:
FIG. 1 is a schematic illustration of a component;
FIG. 2 is a cross sectional view of a surface of the component following its original manufacture;
FIG. 3 is a cross sectional view of the surface of the component following stripping and re-coating processes;
FIG. 4 is a diagram of a shift of fluid flow passage location data;
FIG. 5 is a schematic illustration of a tool for automatically locating and clearing fluid flow passages of the component of FIGS. 1-3 in accordance with embodiments;
FIG. 6 is a flow diagram illustrating a method of automatically locating and clearing fluid flow passages of the component of FIGS. 1-3 in accordance with embodiments;
FIG. 7 is a perspective view of a tool for automated location and modifying in accordance with embodiments;
FIG. 8 is a side schematic view of a head of the tool of FIG. 7 in accordance with alternative embodiments; and
FIG. 9 is a side schematic view of a head of the tool of FIG. 7 in accordance with alternative embodiments.

The detailed description explains embodiments of the invention, together with advantages and features, by way of example with reference to the drawings.

### DETAILED DESCRIPTION OF THE INVENTION

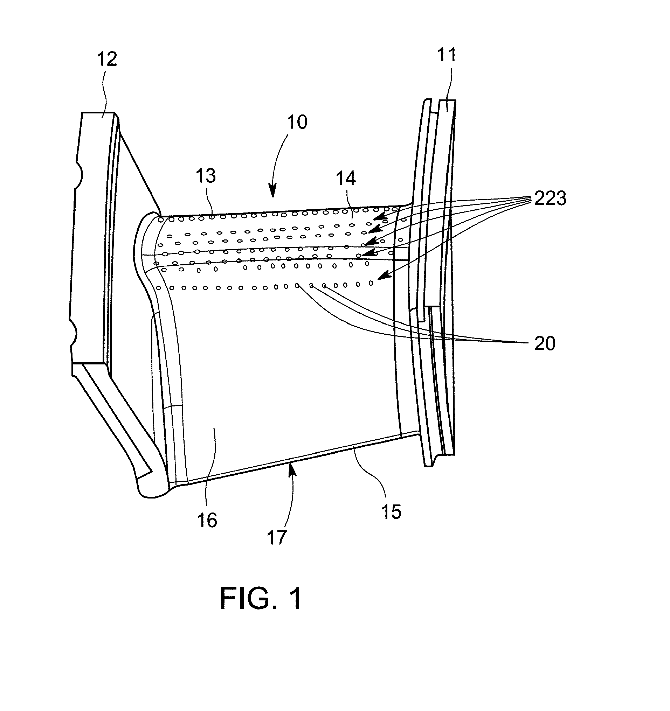

With reference to FIG. 1, a component 10 is provided. The component 10 may be, for example, a turbine component, such as a shroud, a liner, a nozzle or a bucket of a turbine stage of a gas turbine engine, but it will be understood that the component 10 can be any component of any device. Where the component 10 is a nozzle of a turbine stage of a gas turbine engine, for example, as shown in FIG. 1, the component 10 may include an inboard platform section 11, an endwall section 12 opposite the inboard platform section 11 and an airfoil section 13. The airfoil section 13 is radially interposed between the inboard platform section 11 and the endwall section 12. The airfoil section 13 has a leading edge 14 and a trailing edge 15, which are defined with respect to the predominant direction of flow through the turbine stage, a pressure side 16 and an opposite suction side 17. The pressure and suction sides 16 and 17 extend between the leading and trailing edges 14 and 15.

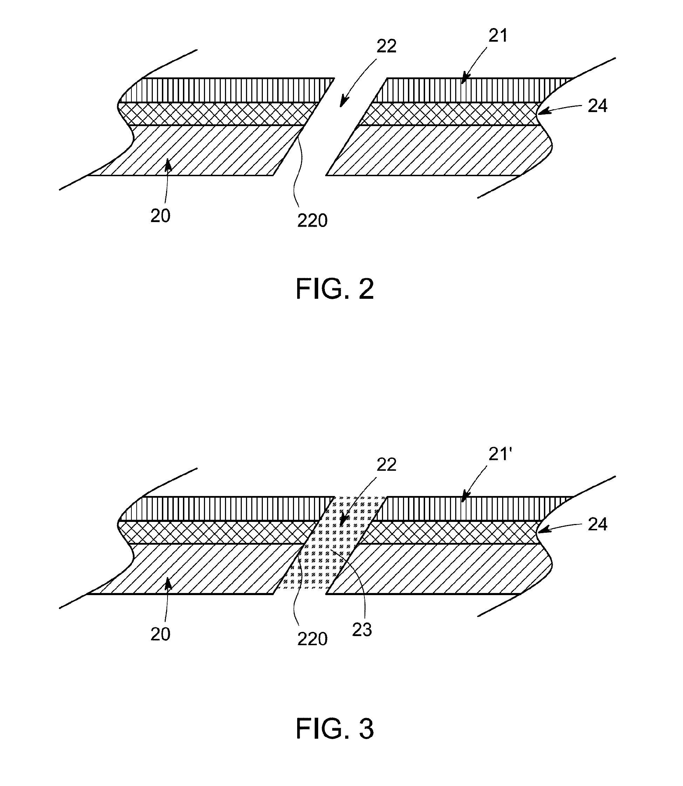

With reference to FIGS. 2 and 3, the component 10 may be formed of a metallic substrate material 20 that is coated with a bondcoat 24 and a thermal or environmental barrier coating (TBC or EBC) 21. The coating 21 is provided to protect the underlying metallic substrate material 20 from damages associated with exposure of the metallic substrate material 20 to high temperatures and high pressure fluids. The component 10 is further formed to define fluid flow passages 22, such as film fluid flow passages or diffusion holes, at one or both of the pressure and suction sides 16 and 17. These fluid flow passages 22 may be formed as passages 220 extending from an interior of the component 10 through the metallic substrate material 20, the bondcoat 24 and the coating 21. The fluid flow passages 22 thus allow for coolant to be directed from the component 10 interior toward various areas of the component 10 to decrease the risk of damage due to exposure to the fluids. Each component 10 may have a significant number of fluid flow passages 22 and there may be a similarly significant number of components 10 arrayed in a given gas turbine engine.

During original part manufacture, the fluid flow passages 22 are normally formed after the bondcoat 24 and the coating 21 are applied. However, during repair processes, the coating 21 may be stripped with the metallic substrate material 20 and bondcoat 24 subsequently re-coated with a new coating 21'. In these cases, the stripping and re-coating processes often result in debris 23 (see FIG. 3) being left in the fluid flow passages 22 that must be cleared in order for the component 10 to perform properly. With a substantial number of fluid flow passages 22 to be cleared for each component 10 and potentially large numbers of components 10 involved, the clearing of each fluid flow passage 22 has to be completed quickly and efficiently. To this end, the description provided below relates to automated location and clearing of the fluid flow passages 22.

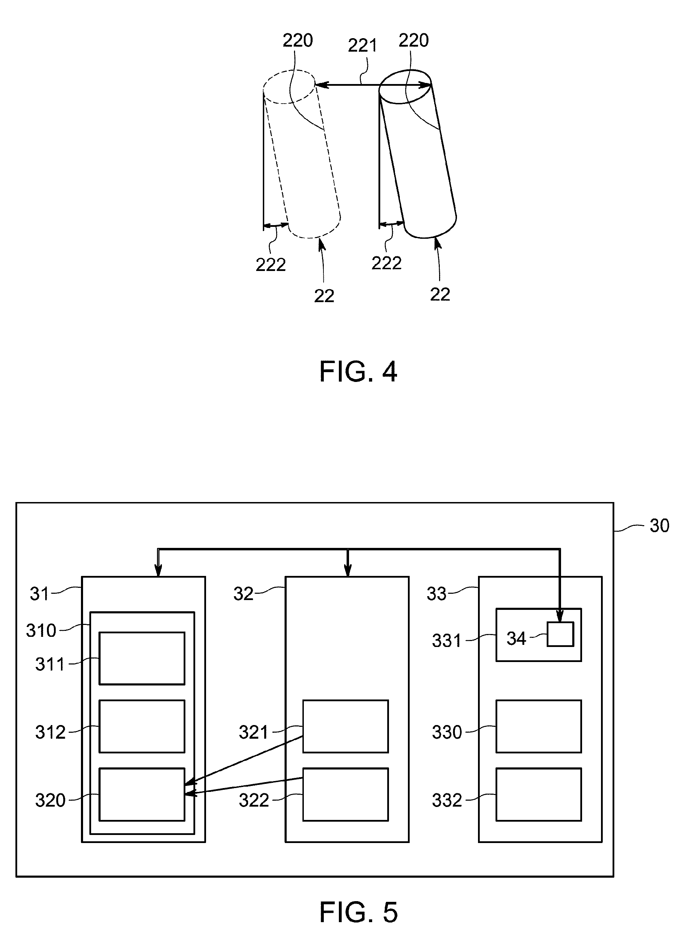

With reference to FIG. 4, it will be understood that full definition of a fluid flow passage 22 for clearing processes requires that both location data and orientation data of the corresponding passage 220 be known. As shown in FIG. 4, the location data of the passage 220 can vary significantly from the desired location defined in the original equipment manufacturer (OEM) computer aided design (CAD) model of the component 10. This variance is identified in FIG. 4 by the displacement associated with reference numeral 221. On the other hand, the orientation data of the passage 220, which corresponds to a drilling vector originally used to define the passage 220, may be substantially accurate between the OEM CAD model and the actual component 10. The accuracy of the orientation data (or the drilling vector) between the OEM CAD model and the actual component 10 is identified in FIG. 4 by the similar angles associated with reference numeral 222.

With the understanding that the location data of the passage 220 can vary significantly from the desired location defined in the original equipment manufacturer (OEM) computer aided design (CAD) model of the component 10 but that the orientation data of the passage 220 may be substantially accurate between the OEM CAD model and the actual component 10, a system or tool 30 is provided for automatically locating and modifying (or clearing) the fluid flow passages 22 of the component 10. With reference to FIG. 5, the tool 30 includes a memory unit 31, a scanning unit 32, a repairing unit 33 and a processing unit 34.

The memory unit 31 may be any type of computer readable storage medium and has a model 310 of the component 10 stored thereon. The model 310 includes drilling vectors 311, which are respectively associated with each of the fluid flow passages 22. The model 310 may further include original OEM CAD location data 312 of each of the fluid flow passages. Such OEM CAD location data 312 may be employed as a reference to roughly position the tool 30 (or the repairing unit 33) or as a way of limiting a scanned portion of the component 10 to only those areas that include fluid flow passages 22 or to only those areas associated with some or a predefined portion of the fluid flow passages 22.

The scanning unit 32 may be disposed to generate at least actual location data 320 of each of the fluid flow passages 22 from a scan of the component 10, or in the case of the partial scan, to generate the actual location data 320 from the partial scan and from calculations of location data derived from the partial scan. The generated actual location data 320 may be stored in the scanning unit 32 or the memory unit 31. In accordance with embodiments, this scan may be performed by the scanning unit 32 with respect to only a portion of the component 10 such as the rows 223 of fluid flow passages 22 (see FIG. 1). In such cases, location data 320 for the remainder of the component 10 (i.e., the un-scanned portion) is interpolated from the partial scan.

In accordance with further alternative embodiments, the scanning unit 32 may be configured to electromagnetically, photographically or use optical based metrology to scan the component 10. In the case of electromagnetic scanning, the scanning unit 32 may include an electromagnetic probe 321, such as an eddy current probe) that is responsive to empty fluid flow passages 22 or to permanent magnetic material disposed in or inserted into the fluid flow passages 22 to be scanned. In the case of the photographic or optical based metrological scanning, the scanning unit 32 may include an optical scanner 322, infrared scanner, a black light element, etc., and in any case is configured to photographically or use optical based metrology to scan the fluid flow passages 22 from multiple angles. In accordance with still further alternative embodiments, the scanning unit 32 may perform the scanning with the component 10 in a serviced condition at least one of before the coating 21 is stripped, during a mid-repair process after the coating 21 is stripped, during post-processing after the re-coating of the component 10 and via an OEM scan.

The scanning may also be conducted with combined machine vision and a laser displacement sensor. In this case, a two dimensional image is processed from photographs taken of the component 10 and third dimensional data is derived from use of the laser displacement sensor. In some cases, the laser displacement sensor can be replaced with or substituted for structured laser slit beams.

The original OEM CAD location data 312 and/or the actual location data 320 may be defined relative to various reference points. For example, the original OEM CAD location data 312 and/or the actual location data 320 may be defined relative to traditional component 10 datums, relative to an external datum on the component 10 or relative to a fluid flow passage 22 datum on the component 10.

The repairing unit 33 is configured to automatically clear and reestablish each of the fluid flow passages 22. To this end, the repairing unit 33 may be positioned at various locations with respect to the component 10 and at various orientations. The initial position of the repairing unit 33 may be manually or automatically adjustable as the clearing processes proceeds from one fluid flow passage 22 to another fluid flow passage 22. Accordingly, the repairing unit 33 may include a tool portion 330 that conducts the clearing processes, a driving portion 331 that maneuvers the tool portion 330 from one fluid flow passage 22 to another and a control portion 332 that controls operations of both the tool portion 330 and the driving portion 331. In accordance with embodiments, the tool portion 330 may include at least one of a laser, a water jet, an abrasive blast, an electro-dynamic machining tool, an electro-chemical machining tool and a machining tool.

The control portion 332 may include servo elements coupled to the driving portion 331 while the processing unit 34 may be a component of the control portion 332 or a standalone feature. In either case, the processing unit 34 is disposed to access the memory unit 31 and the scanning unit 32 and to position the repairing unit 33 by issuing appropriate commands to the servo elements of the control portion 332. More particularly, the processing unit 34 accesses at least the drilling vectors 311 of the memory unit 31 and is receptive of the actual location data 320 from the scanning unit 32.

The processing unit 34 is thus able to fully define three-dimensional coordinates of the passages 220 of the fluid flow passages 22 to be cleared and is configured to position the repairing unit 33 in accordance with the drilling vectors 311 and the actual location data 320. That is, the nominal model 310 is transformed into an actual model through a shifting of the location data of the fluid flow passages 22 to reflect their actual positions with virtually no change in the orientations (i.e., drilling vectors) of the fluid flow passages 22 from the nominal model 310 to the actual model. In accordance with further embodiments, the processing unit 34 may also access the original OEM CAD location data 312 of the memory unit 31 and use such data to validate and verify the actual location data 320.

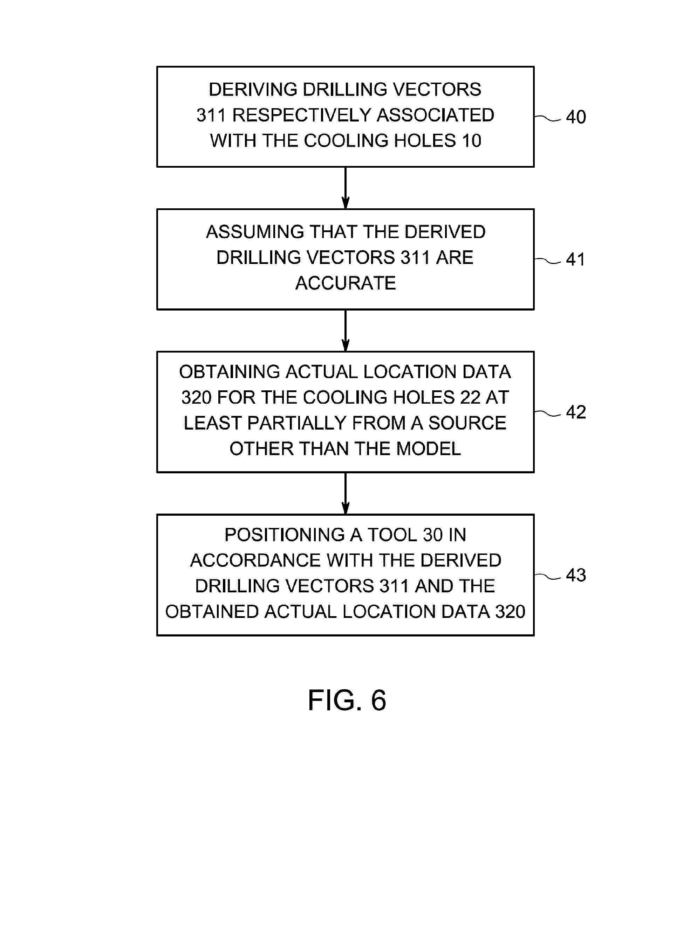

In accordance with further aspects of the invention and, with reference to FIG. 6, a repair method for use with the component 10 is provided. The method includes deriving, from a model 310 of the component 10, drilling vectors 311 respectively associated with the fluid flow passages 22 (operation 40). The method further includes assuming that the derived drilling vectors 311 are accurate (operation 41) in accordance with the explanation of such assumed accuracy provided above, and obtaining actual location data 320 for the fluid flow passages 22 at least partially from a source other than the model 310, such as the scanning unit 32 (operation 42). At this point, the method includes positioning a tool 30, which is configured to clear each of the fluid flow passages 22, in accordance with the derived drilling vectors 311 and the obtained actual location data 320 (operation 43).

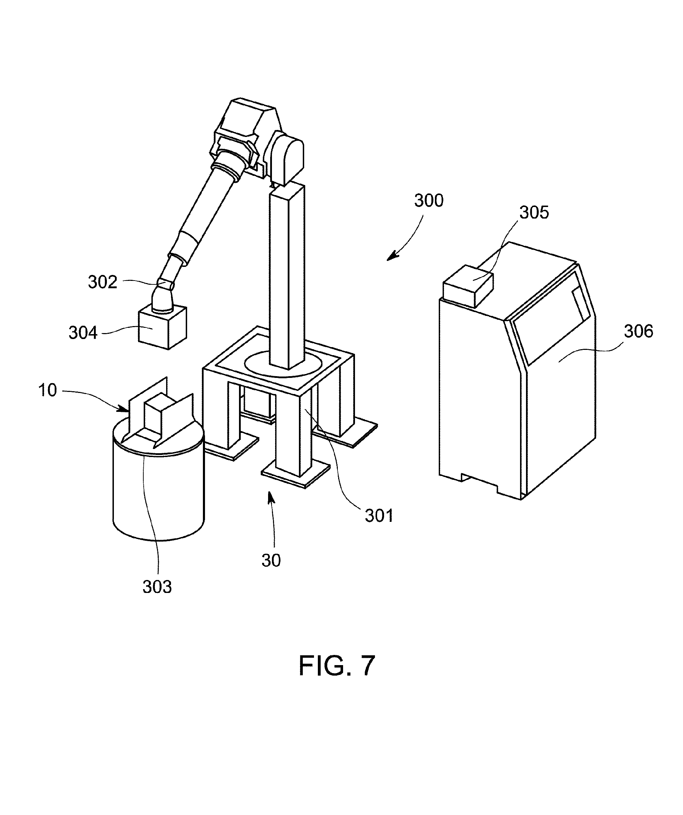

With reference to FIG. 7, an embodiment of the system or tool 30 as described above is provided. As shown in FIG. 7, the tool 30 may be provided as an automated passage location and modification tool (hereinafter referred to as an "automated tool") 300. The automated tool 300 may but is not required to be used to prepare the component 10 for crack filling operations and to execute crack filling operations. In crack filling operations, braze material (i.e., powdered metal) is brazed into the component 10 to fill cracks propagating through the component 10. In some cases, these cracks propagate at the fluid flow passages 22 such that the crack filling operations need to be executed with respect to the fluid flow passages 22. In other cases, however, the fluid flow passages 22 are not subject to cracking and need to be filled with material (e.g., masking material or the like) to prevent braze material from entering and possibly clogging the fluid flow passages 22.

The automated tool 300 includes a base 301, an automated manipulator (e.g., a robotic arm) 302 supported on the base 301, a single- or multi-axis positioner unit 303 disposed proximate to the base 301 and on which the component 10 may be disposed, first and second heads 304 and 305, which may be permanently coupled to a distal end of the automated manipulator 302 or replaceable at the distal end of the automated manipulator 302, and a controller 306. The first head 304 may be provided as the scanning unit 32 described above while the automated manipulator 302 and the controller 306 may include the other elements of the tool 30 (i.e., the memory unit 31 and the processing unit 34). Thus, the controller 306 may be employed to derive the drilling vectors 311 of the component 10 and the first head 304 may be employed to obtain the actual location data 320 of all of the fluid flow passages 22 of the component 10, a predefined portion of the fluid flow passages 22 or a portion of the fluid flow passages 22 that do not require crack filling operations.

In accordance with embodiments, with the drilling vectors 311 derived and the actual location data 320 obtained, the first head 304 may be substituted for or replaced by the second head 305 and the automated manipulator 302 may be controlled by the controller 306 to position the second head 305 with respect to the component 10 (or vice versa). More particularly, the automated manipulator 302 may be controlled by the controller 306 to position the second head 305 to perform dispensation of material into those fluid flow passages 22 of the component 10 that do not require crack filling operations such that braze material is not permitted to enter these fluid flow passages 22.

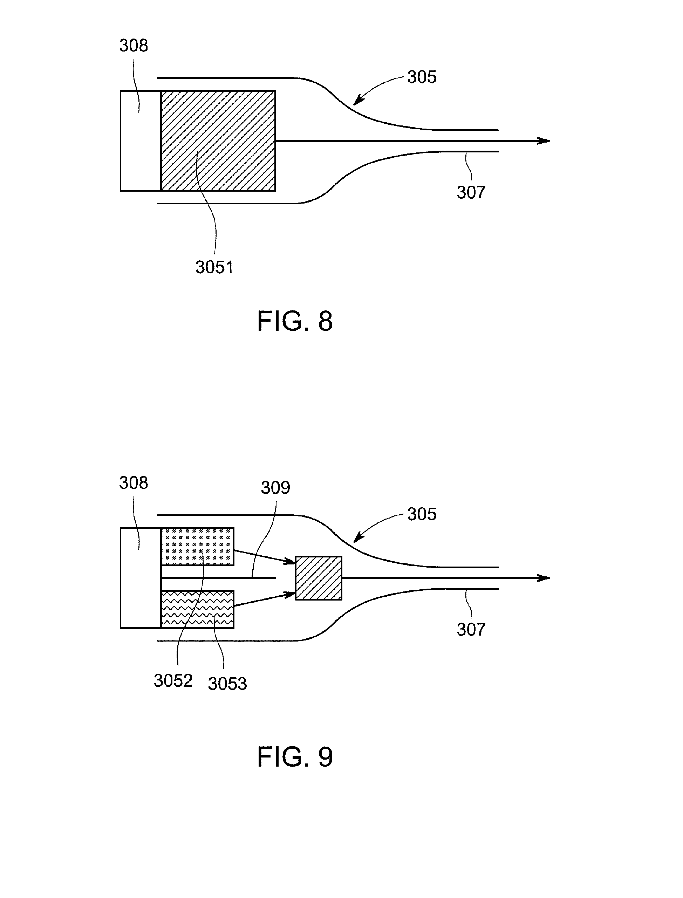

In accordance with further alternative embodiments of the invention and, with reference to FIGS. 8 and 9, the second head 305 may be configured with a supply of pre-mixed masking material 3051 stored therein (see FIG. 8) or with respective supplies of binder material 3052 and filler material 3053 (see FIG. 9). In the latter case, it is understood that the masking material 3051 has a shelf-life and that the ability to mix the binder material 3052 and the filler material 3053 in the second head 305 may increase a versatility of the second head 305.

As shown in FIG. 8, the second head 305 includes an extrusion tip 307 and a plunger 308. As the plunger 308 moves toward the extrusion tip 307, the masking material 3051 is forced outwardly through the extrusion tip 307. As shown in FIG. 9, the movement of the plunger 308 toward the extrusion tip 307 causes the binder material 3052 and the filler material 3053 to mix downstream of baffle 309 to form the masking material 3051, which is in turn forced outwardly through the extrusion tip 307.

While the invention has been described in detail in connection with only a limited number of embodiments, it should be readily understood that the invention is not limited to such disclosed embodiments. Rather, the invention can be modified to incorporate any number of variations, alterations, substitutions or equivalent arrangements not heretofore described, but which are commensurate with the spirit and scope of the invention. Additionally, while various embodiments of the invention have been described, it is to be understood that aspects of the invention may include only some of the described embodiments. Accordingly, the invention is not to be seen as limited by the foregoing description, but is only limited by the scope of the appended claims.

Various aspects and embodiments of the present invention are defined by the following numbered clauses:
1. An automated passage location and modification tool, comprising:
   an automated manipulator;
   first and second heads, which are respectively configured to be coupled to the automated manipulator, the first head being configured to scan at least a portion of a component and the second head being configured to dispense material with respect to the component; and
   a controller configured to position the first and second heads relative to the component, the positioning of at least the second head being in accordance with drilling vectors of fluid flow passages derived from a model of the component and a result of the scan of the component by the first head.
2. The automated passage location and modifying tool according to clause 1, further comprising:
   a positioner on which the component is disposable; and
   a base disposable proximate to the positioner and configured to support the automated manipulator.
3. The automated passage location and modifying tool according to clause 1 or 2, wherein the second head is configured to dispense material into the fluid flow passages of the component.
4. The automated passage location and modifying tool according to any preceding clause, wherein the scan comprises an image formation of an entirety or at least a portion of the component.
5. The automated passage location and modifying tool according to any preceding clause, wherein the second head comprises a supply of pre-mixed masking material.
6. The automated passage location and modifying tool according to any preceding clause, wherein the second head comprises a supply of filler material.
7. The automated passage location and modifying tool according to any preceding clause, wherein the supply of filler material is mixable in the second head.

## Claims

1. A repair method, comprising:
deriving (40), from a model (310) of a component (10), drilling vectors (311) respectively associated with fluid flow passages (22) of the component (10);
obtaining (42) location data (320) of each of the fluid flow passages (22) at least partially from a source other than the model (310); and
relying (43) upon the derived drilling vectors (311) and the obtained location data (320) of each of the fluid flow passages (22) to position a tool (30) configured to modify each of the fluid flow passages (22).

2. The repair method according to claim 1, wherein the method is usable with all or a portion of the fluid flow passages (22) of the component (10).

3. The repair method according to claim 1 or 2, wherein the obtaining (42) of the location data (320) comprises electromagnetically (312) locating the fluid flow passages (22).

4. The repair method according to claim 1 or 2, wherein the obtaining (42) of the location data (320) comprises using optical based metrology (322) to locate the fluid flow passages (22).

5. The repair method according to any of claims 1 to 4, wherein the obtaining (42) of the location data (320) comprises obtaining the location data (320) from a portion of the component and interpolating location data of a remainder of the component (10).

6. The repair method according to any preceding claim, wherein the obtaining (42) of the location data (320) comprises at least one of obtaining the location data (320) with the component (10) in a serviced condition, obtaining the location data (320) during a mid-repair process, obtaining the location data (320) following a re-coating process and obtaining the location data (320) via original equipment manufacturer scan.

7. The repair method according to any preceding claim, wherein the relying (43) comprises relating the derived drilling vectors (311) and the obtained location data (312) of each of the fluid flow passages (22) to at least one of a traditional part datum, an external datum on the component (10) and a fluid flow passage (22) of the component (10).

8. The repair method according to any preceding claim, wherein the tool (30) is configured to automatically clear and reestablish each of the fluid flow passages (22).

9. A system for automatically locating and clearing fluid flow passages (22) of a component (10), the tool (30) comprising:
a memory unit (31) in which a model (310) of the component (10) is stored, the model comprising drilling vectors (311) respectively associated with each of the fluid flow passages (22);
a scanning unit (32) disposed to generate location data (320) of each of the fluid flow passages (22) from a scan of the component (10);
a repairing unit (33) configured to automatically clear and reestablish each of the fluid flow passages (22); and
a processing unit (34) disposed to access the memory unit (31) and the scanning unit (32) and to position the repairing unit (33) in accordance with the drilling vectors (311) and the location data (312).

10. The system according to claim 9, wherein the model (310) comprises an original equipment manufacturer (OEM) computer aided design (CAD) model.

11. The system according to claim 9 or 10, wherein the model further comprises original location data (312) and the scanning unit (32) generates the location data (320) from the scan of the component (10) and the original location data (312).

12. The system according to any of claims 9 to 11, wherein the scanning unit (32) generates the location data (320) from a scan of a portion of the component (10).

13. The system according to any of claims 9 to 12, wherein the scanning unit (32) is configured to electromagnetically, photographically or use optical based metrology to scan the component (10).

14. The system according to any of claims 9 to 13, wherein the repairing unit comprises at least one of a laser, a water jet, an abrasive blast, an electro-dynamic machining tool, an electro-chemical machining tool and a machining tool.

15. An automated passage location and modification tool, comprising:
an automated manipulator (302);
first and second heads (304,305), which are respectively configured to be coupled to the automated manipulator (302), the first head (304) being configured to scan at least a portion of a component (10) and the second head (305) being configured to dispense material (3051-3053) with respect to the component (10); and
a controller (306) configured to position the first and second heads (304,305) relative to the component (10), the positioning of at least the second head (305) being in accordance with drilling vectors (311) of fluid flow passages (22) derived from a model (310) of the component (10) and a result of the scan of the component (10) by the first head (304).
